# EUROPÄISCHE PATENTSCHRIFT

(11) **EP 0 877 675 B1**
(45) Veröffentlichungstag und Bekanntmachung des Hinweises auf die Patenterteilung: **31.07.2002**
(21) Anmeldenummer: 97951105.2
(22) Anmeldetag: 02.12.1997
(51) Int. Cl.: B60N 2/42, B60N 2/48

(54) **VORRICHTUNG ZUM VERSTELLEN DER NEIGUNG (WINKELSTELLUNG) EINER KOPFSTÜTZE AN EINER SITZLEHNE EINES FAHRZEUGSITZES**
DEVICE FOR ADJUSTING THE INCLINATION (ANGULAR POSITION) OF A HEADREST ON THE BACKREST OF A VEHICLE SEAT
DISPOSITIF POUR AJUSTER L'INCLINAISON (POSITION ANGULAIRE) D'UN APPUI-TETE AU-DESSUS DU DOSSIER D'UN SIEGE DE VEHICULE

(30) Priorität: 04.12.1996 DE 19650321; 19.07.1997 DE 19731059
(43) Veröffentlichungstag der Anmeldung: 18.11.1998
(73) Patentinhaber: ADAM OPEL AG, 65423 Rüsselsheim (DE)
(72) Erfinder: LEUCHTMANN, Andrew, D-55595 Mandel (DE); POKOJ, Ralf, D-57368 Lennestadt (DE); SCHMIDT, Reinhard, D-57368 Lennestadt (DE); MUHR, Jürgen, D-82288 Kottgeisering (DE)
(86) Internationale Anmeldenummer: DE9702806
(87) Internationale Veröffentlichungsnummer: WO9824651

(56) Entgegenhaltungen:
- EP-A- 0 627 340
- WO-A-97/10117
- DE-A- 2 232 726
- DE-A- 3 822 461
- GB-A- 1 483 567
- US-A- 3 838 870
- US-A- 4 511 180
- US-A- 5 056 816

## Beschreibung

Die Erfindung betrifft eine Vorrichtung zum Verstellen der Neigung (Winkelstellung) einer Kopfstütze an einer Sitzlehne eines Fahrzeugsitzes nach dem Oberbegriff des Patentanspruches 1.

In einem Unfallgeschehen, insbesondere einem starken Heckaufprall, wird der Kopf des Fahrzeuginsassen nach vorne und nach hinten mit hohen Beschleunigungen bewegt, wobei aufgrund der dabei auftretenden Kräfte (Peitscheneffekt) insbesondere im Halswirbelbereich schwere Verletzungen auftreten können. Häufig geschehen diese Verletzungen aufgrund einer nicht korrekten Stellung der Kopfstütze in der zweiten Bewegungsphase, so dass der Kopf zu weit nach hinten bewegt wird.

Aus der gattungsbildenden GB-A-1 483 567 ist eine Vorrichtung zum Verstellen der Neigung einer Kopfstütze bekannt, bei der eine Schwenkung der Kopfstütze und ihrer Abstützung an der Sitzlehne nach vorne um eine durch den oberen Bereich der Sitzlehne verlaufende Achse vorgesehen ist. Das Zurückschwenken der Kopfstütze in der zweiten Bewegungsphase wird bei dieser Lösung durch eine Rücklaufsperre verhindert, die im Wesentlichen aus einem mit der Sitzlehne verbundenen Riegelelement besteht, der in einer bestimmten vorderen Stellung der Kopfstütze in eine Rastausnehmung eingreift, die an einem mit der Abstützung der Kopfstütze verschiebbar verbundenen und durch eine Feder vorgespannten Halter angeordnet ist. Das Riegelelement wirkt somit nicht unmittelbar mit der Abstützung bzw. deren Lagerung an der Sitzlehne zusammen, sondern die Sperrwirkung des Riegelelements wird über den verschiebbaren Halter auf die Abstützung übertragen.

Aufgabe der Erfindung ist es daher, eine Vorrichtung der eingangs genannten Art zu schaffen, bei welcher die Sicherheitsfunktion der Kopfstütze erheblich verbessert wird.

Diese Aufgabe wird erfindungsgemäß durch die Merkmale des Patentanspruches 1 gelöst.

Durch die Erfindung wird eine aktive Sicherheitsfunktion der Kopfstütze dadurch erreicht, dass bei Einwirkung einer überhöhten Beschleunigung auf das Fahrzeug insbesondere von der Heckseite her, die Antriebseinrichtung ausgelöst wird, so dass die Kopfstütze um einen bestimmten Winkel, insbesondere 15° bis 20° nach vorne geschwenkt wird. Hierdurch wird verhindert, dass in der zweiten Bewegungsphase der Kopf des Fahrzeuginsassen zu weit nach hinten bewegt wird. Hieraus ergibt sich eine erhebliche Verringerung der Verletzungsgefahr durch den sogenannten Peitscheneffekt.

Nach dem Nachvorneschwenken der Kopfstütze wird durch eine Sperre (Rücklaufsperre) das Drehelement und die daran gelagerte Kopfstütze gegen eine Rückdrehung gesichert. Die Sperre wirkt dabei erfindungsgemäß direkt auf das Drehelement, welches in der Sitzlehne drehbar gelagert ist.

Für den Start der Antriebseinrichtung, welche nach einer ersten Ausführungsform ähnlich wie ein Gurtstraffer ausgebildet sein kann und eine pyrotechnisch angetriebene Kolbenzylindereinrichtung oder mechanische Antriebseinrichtung mit einer Druckfeder sein kann, wird bevorzugt durch eine fahrzeugsensitive Einrichtung (Fahrzeugsensor) gestartet. Dieser Sensor ist an einem fahrzeugfesten Teil beispielsweise an der Sitzunterschiene befestigt. Bei einem bevorzugten Ausführungsbeispiel kann die fahrzeugsensitive Einrichtung, welche die Antriebseinrichtung auslöst, in die Antriebseinrichtung integriert sein, wobei auch die Antriebseinrichtung am Fahrzeugaufbau beispielsweise an der Sitzunterschiene befestigt ist.

Die Kopfstütze kann am Drehelement derart geführt sein, daß bei der angetriebenen Drehbewegung nach vorne die Kopfstütze gleichzeitig bezüglich der Achse, um welche das Drehelement gedreht wird, radial nach außen bewegt wird. Hierdurch wird vermieden, daß die vertikale Höheneinstellung der Kopfstütze beim Nachvorneschwenken sich verringert.

Für die Drehlagerung des Drehelements eignet sich eine rohrförmige Drehlagerung im oberen Teil der Sitzlehne. Im Normalbetrieb ist das Drehelement gegen Drehung um die in der Sitzlehne liegenden Achse verriegelt. Diese Verriegelung kommt bevorzugt zur Wirkung zwischen der Drehlagerung und dem Drehelement. Die Verriegelung kann in der Weise ausgebildet sein, daß sie durch die Antriebskraft der Antriebseinrichtung gelöst werden kann. Die Antriebskraft der Antriebseinrichtung wird bevorzugt durch einen Bowdenzug, welcher mit einem Bajonettverschluß an einem Antriebselement der Antriebseinrichtung angeschlossen sein kann, übertragen. Hierdurch wird eine Vormontage der Antriebseinrichtung am fahrzeugfesten Aufbau ermöglicht, wobei dann nach dem Einbau des Sitzes die Kraftübertragungseinrichtung zwischen der Antriebseinrichtung und dem Schwenkmechanismus für die Kopfstütze nachträglich angeschlossen werden kann.

Die Kopfstütze bzw. ein an der Kopfstütze angeordnetes und eine Abstützfläche für den Kopf eines Insassen bildendes Polsterteil kann gemäß einer Weiterbildung der Erfindung höhenverstellbar an der Stützeinrichtung ausgebildet sein, wobei die Höhenverstellung im Falle eines Frontal- bzw. Heckaufpralls durch die genannte bzw. eine weitere Antriebseinrichtung erfolgen kann. Die Kopfstütze bzw. das Polsterteil ist bei dieser Ausführung verstellbar an einer mit der Stützeinrichtung verbundenen Trageinrichtung angeordnet.

Wesentliche Vorteile dieser Ausbildung bestehen darin, daß die in der Regel aus Komfortgründen gegenüber der Rückenlehne etwas zurückgesetzte Kopfstütze im Falle eines Frontal- bzw. Heckaufpralls durch die Antriebseinrichtung nicht nur in eine optimale weiter vorne liegende Stützposition überführt, sondern auch in der Höhe verstellt wird. Für eine derartige aktive Verstellung der Kopfstütze ist besonders vorteilhaft, wenn die Antriebseinrichtung gemäß einer zweiten Ausführungsform in der rohrförmigen Drehlagerung integriert ist. Eine solche Antriebseinrichtung kann bei Aktivierung, beispielsweise durch eine zentrale Airbag-Steuerung, auf eine besonders schnelle Weise die Kopfstütze sowohl nach vorne als auch nach oben verstellen.

In Abhängigkeit von räumlichen Verhältnissen oder spezifischen Anforderungen an die aktive Verstellung einer derart ausgebildeten Kopfstütze in der einen oder anderen Richtung können auch mehrere Antriebseinrichtungen vorgesehen sein, welche in der Kopfstütze und/oder rohrförmigen Drehlagerung angeordnet und gleichzeitig oder nacheinander auslösbar ausgebildet sind.

Durch die aktive Verstellung wird die Abstützfläche der Kopfstütze in eine Position gebracht, in der eine etwa gleichzeitige Abstützung des Insassen sowohl an der Rückenlehne als auch an der Kopfstütze stattfinden kann. Eine gefährliche Krümmung bzw. Überbelastung der Halswirbelsäule des Insassen beim Heckaufprall bzw. einem Zurückschleudern in den Kraftfahrzeugsitz nach beispielsweise einem Frontalaufprall wird durch diese Verstellung der Kopfstütze vermieden.

Die aktive Verstellung der Kopfstütze erfolgt unabhängig von der in der Höhe bzw. in der Neigung eingestellten Position der Kopfstütze. Nach der Auslösung der Antriebseinrichtung wird somit eine sichere Anlage (Abstützung) des Kopfes des Insassen auch bei einer versehentlich nicht richtig oder zu niedrig eingestellten Kopfstütze erreicht. Da bei dieser Ausführung gleichzeitig eine zusätzliche Abstützfläche zwischen der nach oben bewegten Kopfstütze und der Oberkante der Rückenlehne gebildet wird, werden mögliche Verletzungen durch Stützeinrichtungen vermieden.

Ein weiterer Vorteil der vorgeschlagenen Ausführung besteht darin, daß die Kopfstütze bei der Verstellung in der Höhenrichtung derart verriegelbar ausgebildet ist, daß eine zusätzliche Aufnahme von etwa in vertikaler Richtung wirkenden Kräften, beispielsweise bei einem nachfolgenden Überschlag des Kraftfahrzeuges, durch die Kopfstütze möglich ist.

Die Erfindung läßt zahlreiche Ausführungsformen zu. Zur weiteren Verdeutlichung ihres Grundprinzips sind einige davon in der Zeichnung dargestellt und nachfolgend beschrieben. Die Zeichnung zeigt teilweise schematisch in
- Fig. 1:: in perspektivischer Darstellung ein Kraftfahrzeugsitz mit einem Ausführungsbeispiel der Erfindung;
- Fig. 2:: in perspektivischer auseinandergebauter Darstellung Einzelteile des Ausführungsbeispiels nach Fig. 1;
- Fig. 3:: eine schnittbildliche Darstellung durch einen wesentlichen Bestandteil dieses Ausführungsbeispiels;
- Fig. 4:: eine schnittbildliche Darstellung eines modifizierten wesentlichen Teils der Erfindung, welches einen Höhenausgleich der Kopfstütze beim Nachvorneschwenken ermöglicht;
- Fig. 5:: einen Bajonettverschluß, mit welchem eine Antriebsverbindung zwischen einer Antriebseinrichtung und der Drehlagerung der Kopfstütze hergestellt werden kann;
- Fig. 6:: eine Schnittdarstellung einer alternativen Kopfstütze im vormontierten Zustand;
- Fig. 7:: eine Seitenansicht der Kopfstütze nach Fig. 6 im eingebauten Zustand, teilweise geschnitten;
- Fig. 8:: die Kopfstütze nach Fig. 7, jedoch in einem infolge eines Unfalls nach vorn und nach oben verstellten Zustand;
- Fig. 9:: eine räumliche Ansicht der Kopfstütze nach Fig. 8;
- Fig. 10:: einen vertikalen Längsschnitt durch die Verstelleinrichtung der Kopfstütze nach Fig. 6;
- Fig. 11:: Einzelteile der Kopfstütze nach Fig. 6 in räumlicher Darstellung;
- Fig. 12:: eine räumliche Darstellung einer alternativen Ausbildung der Kopfstütze nach Fig. 6;
- Fig. 13:: eine weitere alternative Ausbildung der Kopfstütze nach Fig. 6.

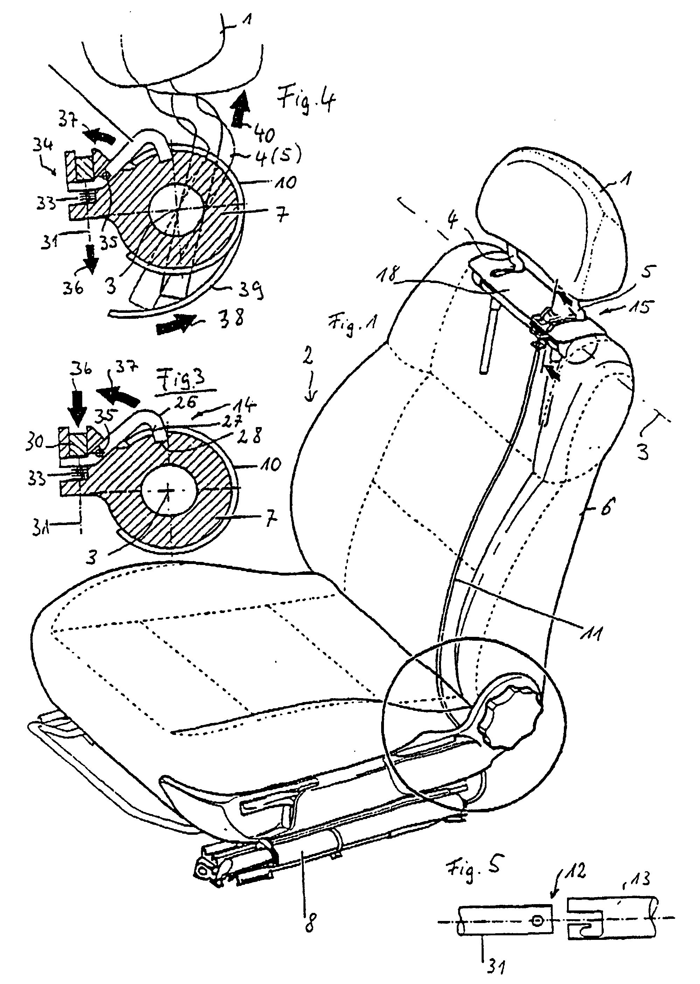

Bei einem Kraftfahrzeugsitz (Fig. 1) ist im oberen Teil einer Sitzlehne 6 eine Vorrichtung 15 zum Verstellen der Neigung einer Kopfstütze 1 dargestellt. Durch die Vorrichtung 15 kann die Kopfstütze 1 um eine durch den oberen Teil der Sitzlehne 6 verlaufende Achse 3 aktiv nach vorne verschwenkt werden. Wenn das Fahrzeug in einen Unfall verwickelt ist und insbesondere ein Heckaufprall auf das Kraftfahrzeug geschieht, wird durch eine Antriebsvorrichtung 8, welche über einen vorzugsweise in der Sitzlehne verlaufenden Bowdenzug 11 ihre Antriebskraft auf die Vorrichtung 15 überträgt, die Kopfstütze in einem bestimmten Winkel beispielsweise 15° bis 20° nach vorne um die Achse 3 verschwenkt. Diese Verschwenkung erfolgt nur dann, wenn das Fahrzeug in einen Unfall verwickelt ist. Im Normalbetrieb kann die Kopfstütze 1 um eine in der Kopfstütze 1 liegende Achse in herkömmlicher Weise noch verschwenkt werden. Die Kopfstütze 1 ist in bekannter Weise über Stützstäbe 4, 5 an der Sitzlehne abgestützt. Beim dargestellten Ausführungsbeispiel erfolgt die Lagerung der Kopfstütze 1 über die Stützstäbe 4, 5 in einem Drehelement 17 der Vorrichtung 15. Einzelteile dieser Vorrichtung 15 sind in den Fig. 2 und 3 dargestellt, wobei die Fig. 4 eine noch weiter verbesserte Ausführungsform darstellt.

Die die Stützeinrichtung für die Kopfstütze 1 bildenden Stützstäbe 4, 5 sind in der als Drehlagerung ausgebildeten Vorrichtung 15 schwenkbar um die Achse 3 gelagert. Hierzu sind die Stützstäbe 4, 5 in einem Drehelement 7 gelagert, welches seinerseits in einem rohrförmigen Drehlager 10 gelagert ist. Die Stützen 4, 5 ragen dabei durch Langlöcher 16, 17 in einer steifen Abdekkung 18 an der Oberseite der Vorrichtung 15. Die Langlöcher 16, 17 sind so bemessen, daß die Schwenkbewegung der Stützstäbe 4, 5 nach vorne im gewünschten Winkelbereich von beispielsweise 15° bis 20° erreicht wird.

An den beiden Stirnflächen des im wesentlichen zylindrisch ausgebildeten Drehelementes 7 befinden sich Rastverzahnungen 9, die mit entsprechend ausgebildeten Rastverzahnungen 19 an federnd gelagerten Rastelementen 20 in Eingriff kommen können. Die Rastelemente 20 sind verdrehsicher im rohrförmigen Drehlager 10, in welchem das Drehelement 7 drehbar gelagert ist, von den offenen Enden her eingesetzt. Zur Verdrehsicherung greifen Vorsprünge 21 an den Rastelementen 20 in entsprechende Ausnehmungen 22 des rohrförmigen Drehlagers 10. Durch Druckfedern 23, die zwischen am Ende aufgesetzten Verschlußdeckeln 24 und den Rastelementen 20 angeordnet sind, werden die Rastelemente 20 mit ihren Rastverzahnungen 19 auf die Rastverzahnungen 9 des Drehelementes 7 aufgedrückt.

Die Zahnflanken der Verzahnungen 9 und 19 sind so ausgebildet und ausgerichtet, daß eine Schwenkbewegung um die Achse 3 in Vorwärtsrichtung ermöglicht wird, jedoch eine Rückdrehung verhindert wird. Bei der Vorwärtsdrehung des Drehelementes 7 ratschen die Verzahnungen 9 und 19 übereinander, was durch die federnde Auflage der Verzahnungen aufeinander ermöglicht wird. Es wird jedoch eine Rückwärtsdrehung verhindert, da die Rückwärtsdrehrichtung im wesentlichen parallel und senkrecht zur Achse 3 verlaufende Zahnflanken der Verzahnungen 9 und 19 miteinander in Eingriff kommen und aufgrund der drehsicheren Lagerung der Rastelemente 20 an der rohrförmigen Drehlagerung 10 die Rückdrehung verhindert wird. Hierdurch erzielt man durch die Verzahnungen 9 am Drehelement 7 und die Verzahnungen 19 an den Rastelementen 20 eine Rücklaufsperre.

Zur festen Verankerung der rohrförmigen Drehlagerung 10 in der Lehnenkonstruktion der Sitzlehne 6 dienen dort fest verankerte Verankerungsstangen 25, an denen das Drehlager 10 befestigt ist.

In der normalen Betriebsstellung, welche in den Fig. 1 und 2 dargestellt ist, ist das Drehelement 7 mit Hilfe einer Verriegelungseinrichtung 14 an dem rohrförmigen Drehlager 10 und damit an der Lehnenkonstruktion verriegelt und gegen eine Vorwärtsdrehung gesperrt. Die Verriegelungseinrichtung besitzt hierzu einen Verriegelungsbügel 26, welcher schwenkbar an einer geeigneten Stelle des Drehelements 7 um eine Schwenkachse 35 schwenkbar gelagert ist. Die Schwenkachse 35 befindet sich in der Nähe einer Angriffsfläche 34, an welcher der Bowdenzug 11 am Drehelement 7 angreift. In der normalen Betriebsstellung, in welcher das Drehelement 7 gegen eine Vorwärtsdrehung gesichert ist, greift der Verriegelungsbügel 26 durch eine Verriegelungsöffnung 27 im rohrförmigen Drehlager 10 in eine Verriegelungsausnehmung 28 am Drehelement 7 (Fig. 3 und 4) ein.

Wenn bei einem Auffahrunfall die Antriebskraft der Antriebseinrichtung 8 über den Bowdenzug 11 auf das Drehelement übertragen wird, wird eine Bowdenzugdraht 31, welcher im Bowdenzugmantel 32 verschiebbar geführt ist, mit einer an seinem Ende vorgesehenen Verdickung 30 in Pfeilrichtung 36 (Fig. 3 und 4) nach unten gezogen. Dabei wird zunächst der Verriegelungsbügel 26 aus seiner dargestellten Ruheposition gegen die Kraft einer Druckfeder 33, welcher den Verriegelungsriegel normalerweise in der Ruheposition hält, gegen den Uhrzeigersinn in Pfeilrichtung 37 aus seiner Eingriffsposition geschwenkt, so daß das Drehelement 7 nunmehr frei drehbar im Drehlager 10 gelagert ist. Bei weiterem Zug, der von der Antriebseinrichtung 8 auf den Bowdenzugdraht 31 ausgeübt wird, wird das Drehelement 7 um einen bestimmten Winkel beispielsweise 15° bis 20° entgegen den Uhrzeigersinn (Pfeilrichtung 38 in Fig. 2) nach vorne gedreht. Dabei werden die beiden Stützstäbe 4, 5 und die daran gelagerte Kopfstütze 1 nach vorne um die Achse 3 geschwenkt. Bei dem in der Fig. 4 dargestellten Ausführungsbeispiel ist ferner eine Schubführung 39 für die beiden Stützstäbe 4, 5 vorgesehen. Bei der angetriebenen Drehbewegung des Drehelementes 7 greift die Schubführung 39 an den unteren Enden der Stützstäbe 4, 5 an und verschiebt diese im Drehelement 7 nach oben (Pfeilrichtung 40). Diese Schubbewegung erfolgt bezüglich der Drehachse 3 radial nach außen und bewirkt einen Höhenausgleich der Kopfstütze 1 bei ihrer Schwenkbewegung nach vorne (Pfeilrichtung 38). Hierdurch wird gewährleistet, daß die Kopfstütze 1 aufgrund der angetriebenen Schwenkbewegung nach vorne mit ihrer Oberkante nicht niedriger liegt als in ihrer Normalposition.

Um eine einwandfreie Übertragung der Antriebskraft zu erhalten, ist als Kraftübertragungsmittel der Bowdenzug 11 vorgesehen. Der Bowdenzugmantel 32 stützt sich hierzu an einer Bowdenzugabstützung 29 am rohrförmigen Drehlager 10 ab. Der Bowdenzugdraht 31 und die an seinem Ende vorgesehene Verdickung 30 greifen bei der Antriebskraftübertragung an der Angriffsstelle 34, welche als Vorsprung an das Drehelement 7 angeformt ist, in der oben beschriebenen Weise an.

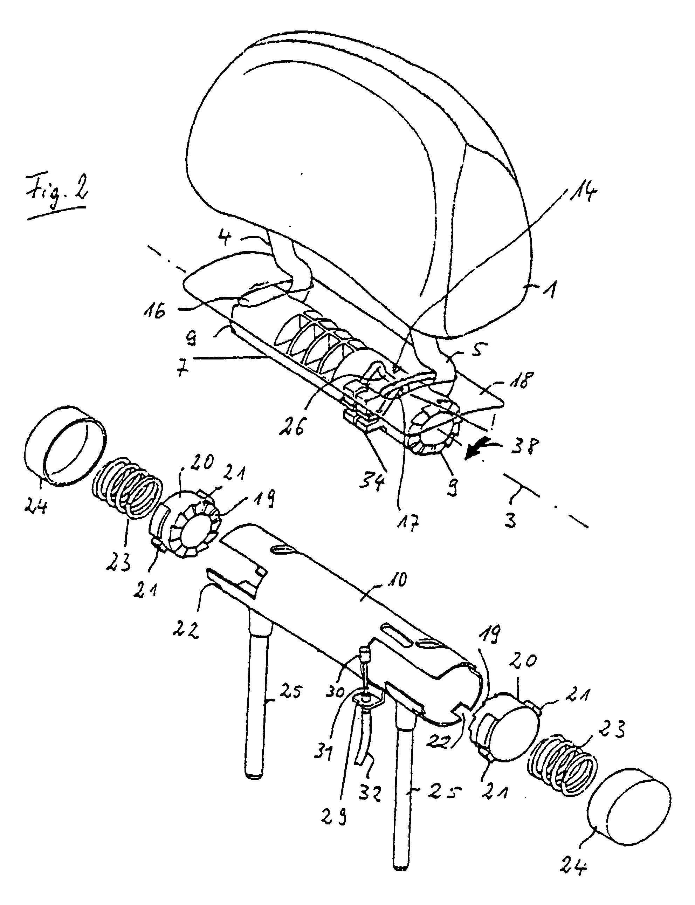

Zur Anbindung des Bowdenzugdrahtes 31 an ein Antriebselement 13 der Antriebseinrichtung 8 kann ein in der Fig. 5 schematisch dargestellter Bajonettverschluß 12 dienen. Das untere Ende des Bowdenzugmantels 32 ist in nicht näher dargestellter Weise ähnlich wie an der Drehlagerung 10 am Gehäuse der Antriebseinrichtung 8 abgestützt.

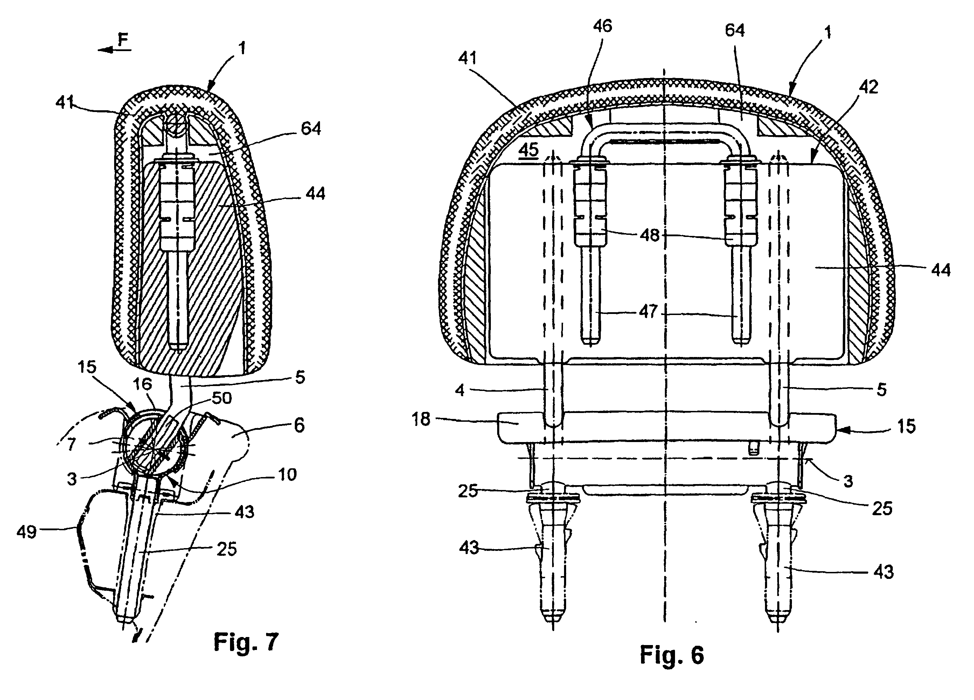

Die Kopfstütze 1 nach Fig. 6 besteht im wesentlichen aus einem formstabilen, an einer Trageinrichtung 42 höhen- und neigungsverstellbar angeordneten Polsterteil 41. Das Polsterteil 41 sowie die Trageinrichtung 42 sind dabei mittels der Vorrichtung 15 im oberen Bereich der nicht dargestellten Sitzlehne 6 um die Achse 3 drehbar gelagert. Die Vorrichtung 15 ist dabei durch zwei Verankerungsstangen 25 in an sich bekannten und mit der Sitzlehne 6 verbundenen Rasthülsen 43 festgehalten.

Zur Halterung des Polsterteils 41 weist die Trageinrichtung 42 zwei beabstandet zueinander angeordnete Stützeinrichtungen 4, 5 sowie einen mit den Stützeinrichtungen 4, 5 verbundenen Stützkörper 44 auf, wobei der Stützkörper 44 einschiebbar in einen Aufnahmeraum 45 des Polsterteils 41 ausgebildet ist. Zum Führen und Fixieren des Polsterteils 41 in der jeweiligen Stützposition ist eine Führungseinrichtung 46 vorgesehen, welche im wesentlichen aus zwei mit dem Polsterteil 41 verbundenen Führungsstangen 47 besteht, die in mit dem Stützkörper 44 verbundenen Führungshülsen 48 auf eine an sich bekannte Weise höhenverstellbar und rastpositionierbar aufgenommen sind. Dazu können beispielsweise an den Führungshülsen 48 federnde Rastmittel und an den Führungsstangen 47 Rastausnehmungen oder Kerben vorgesehen sein. Die Führungseinrichtung 46 ist derart ausgebildet, daß das Polsterteil 41 in der Höhenrichtung auf einfache Weise aus einer Stützstellung in die andere von Hand verstellt werden kann.

In Fig. 7 ist die Befestigung der Kopfstütze 1 an der Sitzlehne 6 verdeutlicht. Dazu sind die Rasthülsen 43, welche jeweils eine Verankerungsstange 25 lösbar aufnehmen, an einer tragenden Struktur 49 der Sitzlehne 6 formschlüssig aufgenommen. Die Vorrichtung 15 ist dabei versenkt im oberen Bereich der Sitzlehne 6 angeordnet. Die Vorrichtung 15 besteht im wesentlichen aus einem rohrförmigen Drehlager 10, in dem zur Aufnahme der Stützeinrichtungen 4, 5 jeweils ein verdrehbares Drehelement 7 vorgesehen ist. Die Drehelemente 7 sind dabei mit der jeweiligen Stützeinrichtung 4, 5 im Bereich eines Lagerabschnitts 50 formschlüssig verbunden und können zusammen mit den Stützeinrichtungen 4, 5 um die Achse 3 verdreht werden. Dazu sind am rohrförmigen Drehlager 10 in den Schwenkbereichen der Lagerabschnitte 50 Langlöcher 16, 17 vorgesehen, welche von der in Fig. 6 dargestellten Abdeckung 18 stilistisch verkleidet sind.

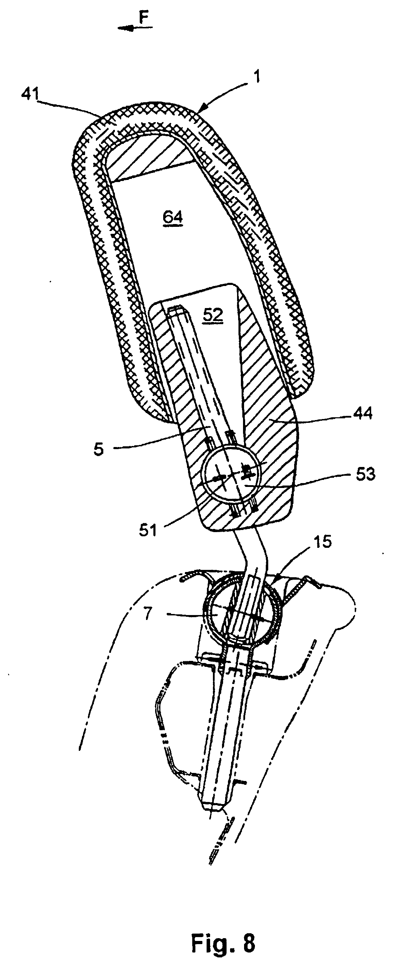

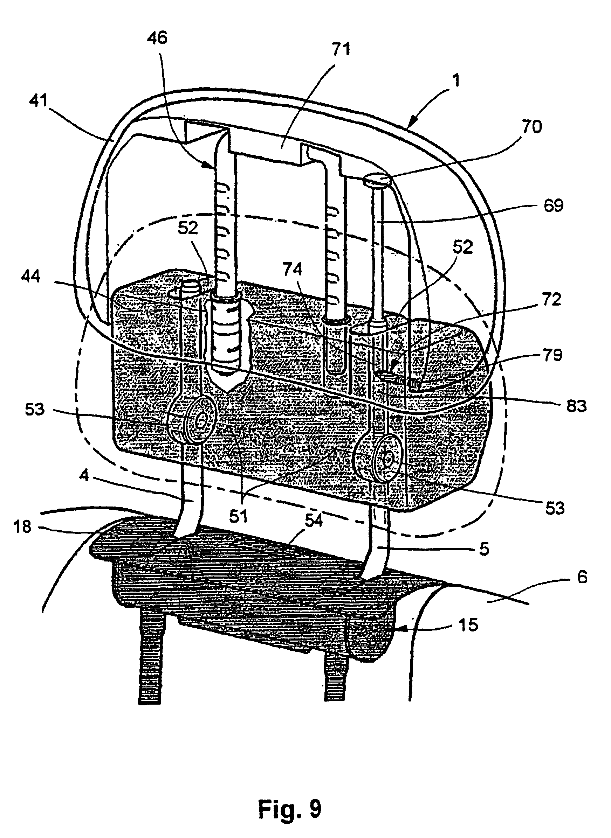

Der Stützkörper 44 und somit auch das Polsterteil 41 sind - wie aus Fig. 8 und Fig. 9 ersichtlich - schwenkbar mit den Stützeinrichtungen 4, 5 verbunden. Zu diesem Zwecke sind für die jeweilige Stützeinrichtung 4, 5 am Stützkörper 44 eine segmentförmige Ausnehmung 52 sowie ein Schwenklager 53 vorgesehen, die entsprechend den Schwenkbereich und die Drehachse 51 des Stützkörpers 44 definieren. Als Schwenklager 53 können dabei übliche, bei neigungsverstellbaren Kopfstützen verwendbare Schwenklager in den Stützkörper 44 eingesetzt werden.

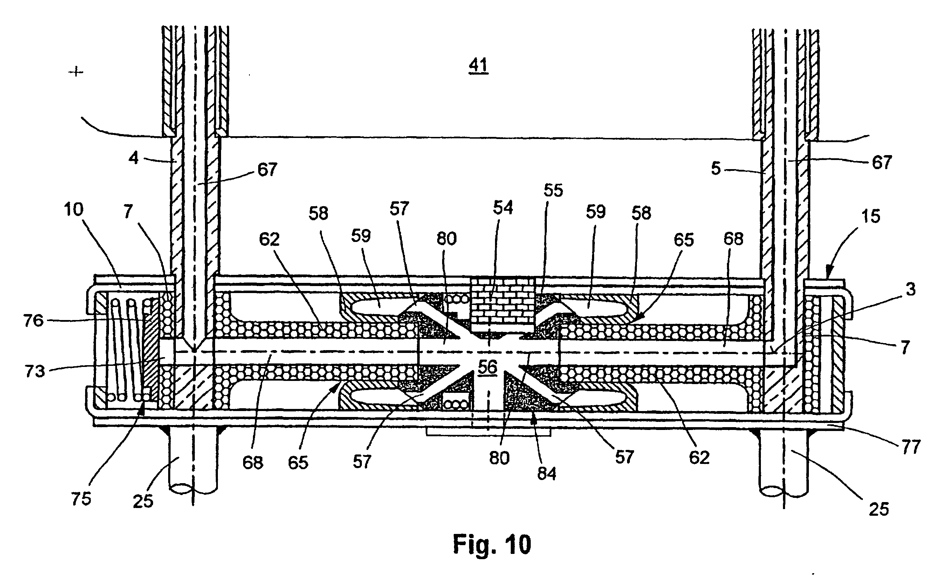

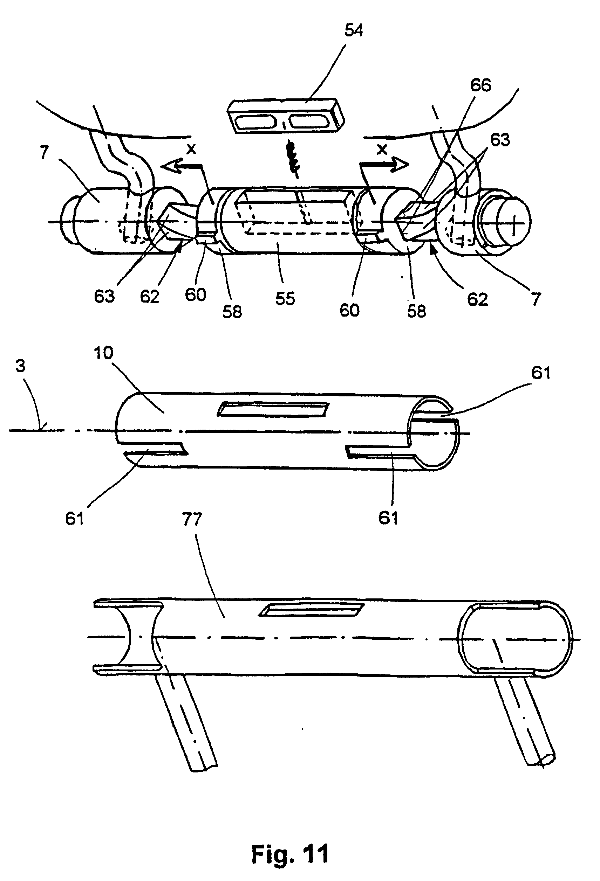

Zum aktiven Verstellen der Kopfstütze 1 bzw. des Polsterteils 41 aus der normalen Stützposition in die weiter vorn und oben liegende Stützposition weist die Vorrichtung 15 eine Antriebsvorrichtung 84 auf, welche - wie in Fig. 10 und Fig. 11 dargestellt - im wesentlichen aus einem innerhalb des rohrförmigen Drehlagers 10 zwischen den Drehelementen 7 angeordneten Druckverteiler 55 (Diffusor) besteht, dessen Druckkammer 56 durch einen nicht dargestellten pyrotechnischen Treibsatz oder einen Hybridgenerator (Gasspeicher) bei Aktivierung mit Druckgas befüllbar ist. Im Druckverteiler 55 sind Kanäle 57 ausgebildet, welche zu jeweils einem innerhalb des rohrförmigen Drehlagers 10 axial verschiebbaren und in Verbindung mit dem jeweiligen Drehelement 7 stehenden Kolben 58 führen. Die Kanäle 57 münden dabei in jeweils einen ringförmigen Raum 59 ein, welcher zwischen dem jeweiligen relativ dicht im Drehlager 10 geführten Kolben 58 und dem Druckverteiler 55 gebildet ist. Über die Kanäle 57 können somit die Räume 59 mit Druckgas beaufschlagt werden.

Die Kolben 58 sind axial verschiebbar, aber unverdrehbar im Drehlager 10 geführt. Dazu sind am jeweiligen Kolben 58 zwei radial abstehende Nasen 60 vorgesehen, welche in diametral zueinander angeordnete und axial ausgerichtete Führungsschlitzen 61 des Drehlagers 10 eingreifen. Die Drehelemente 7 sind dagegen verdrehbar, aber axial unverschiebbar im Drehlager 10 gelagert. An den Drehelementen 7 ist jeweils ein in axialer Richtung ausgerichteter schraubenförmiger Fortsatz 62 ausgebildet, welcher im Querschnitt ein Vierkantprofil aufweist und im montierten Zustand eine entsprechend am Kolben 58 vorgesehene zentrale Öffnung 65 durchsetzt. Jede Seite des Vierkantprofils bildet eine schraubenförmige Führungsfläche 63, welche an einer entsprechenden Seite 66 der Öffnung 65 spielfrei anliegt.

Bei Beaufschlagung der Druckkammer 56 mit Druckgas werden über die Kanäle 57 auch die ringförmigen Räume 59 und somit auch die Kolben 58 mit Druckgas beaufschlagt. Dadurch bewegen sich die Kolben 58 in Pfeilrichtung X auseinander und verdrehen dabei zwangsweise die Drehelemente 7 um einen bestimmten Winkelbetrag (ca. 15° - 20°), welcher durch die Steigung der schraubenförmigen Führungsflächen 63 festgelegt ist. Durch diese Verdrehung der Drehelemente 7 wird auch die mit den Drehelementen 7 verbundene Trageinrichtung 42 zusammen mit dem Polsterteil 41 nach vorne um die Achse 3 um den o. g. Winkelbetrag geschwenkt.

Zum aktiven Verstellen der Kopfstütze 1 bzw. des Polsterteils 41 aus der normalen Stützposition in die weiter oben liegende Stützposition ist - wie aus Fig. 6 bis Fig. 8 ersichtlich - innerhalb des Aufnahmeraumes 45 zwischen dem Polsterteil 41 und dem Stützkörper 44 ein Expansionsraum 64 vorgesehen, welcher mit Druckgas aus der Druckkammer 56 beaufschlagbar ausgebildet ist. Dazu sind die Stützeinrichtungen 4, 5 und die Drehelemente 7 - wie in Fig. 10 dargestellt - jeweils hohl bzw. mit inneren Kanälen 67, 68 sowie der Druckverteiler 55 mit jeweils einem entsprechenden Kanal 80 ausgebildet, welche derart angeordnet und miteinander verbunden sind, daß jeweils ein dichter Verbindungskanal zwischen der Druckkammer 56 und dem Expansionsraum 64 gebildet wird. Bei Druckbeaufschlagung des Expansionsraumes 64 dehnt bzw. vergrößert sich dieser in der etwa vertikalen Richtung, wodurch das Polsterteil 41 nach oben verstellt wird.

Die Kanäle 80 sind im Querschnitt größer als die Kanäle 57 gestaltet, damit der Druckaufbau im Expansionsraum 64 schneller als im Raum 59 der Kolben 58 erfolgen kann. Durch diese Gestaltung wird eine höhere Sicherheit für den Insassen erreicht, da das Polsterteil 41 bei der aktiven Verstellung seine obere Position früher als die weiter vorn liegende Position erreicht.

In Fig. 9 ist eine alternative aktive Verstellung der Kopfstütze 1 in der Höhe dargestellt. Bei dieser Ausführung ist in der hohlen Stützeinrichtung 5 ein Stößel 69 axial verschiebbar eingesetzt, welcher beim Druckgasaufbau in einem innerhalb der Stützeinrichtung 5 ausgebildeten Expansionsraum 83 das Polsterteil 41 gegen den Widerstand der Rasteinrichtungen der Führungseinrichtung 46 in eine höhere Stützposition verstellt. Der Stößel 69 liegt dabei mit seinem oberen (freien) Ende 70 an einer tragenden Struktur 71 des Polsterteils 41 an.

In der nach oben verstellten Position ist das Polsterteil 41 verriegelbar ausgebildet. Dazu ist an der Stützeinrichtung 5 bzw. am Stützkörper 46 ein senkrecht zur Verstellbewegung des Stößels 69 bewegbares Verriegelungselement 72 vorgesehen, welches in Verriegelungsrichtung (zum Stößel 69 hin) durch eine Feder 79 vorgespannt ist und in der Verriegelungsposition des Polsterteils 41 das untere Ende 74 des Stößels 69 untergreift. Das Verriegelungselement 72 kann auch mit einer am Stößel 69 angeordneten Raste, Ausnehmung oder Kerbe zusammenwirken. Durch diese Verriegelung können die bei einem Unfall auftretenden, etwa vertikal auf die Kopfstütze 1 einwirkenden Kräfte über den Stößel 69 auf die Sitzlehne 6 übertragen werden.

Bei der aktiven Verstellung der Kopfstütze 1 bzw. des Polsterteils 41 kann es vorkommen, daß sich ein Hindernis, wie beispielsweise der an der Abstützfläche des in Normalstellung befindlichen Polsterteils 41 anliegende Kopf des Insassen bzw. ein über dem Polsterteil 41 befindliches sonstiges Körperteil im Verstellweg der Kopfstütze 1 befindet. Um in diesem Falle die Kraft, mit welcher die Kopfstütze 1 bzw. das Polsterteil 41 durch die ausgelöste Antriebseinrichtung 84 nach vorn und nach oben verstellt wird, zu begrenzen, ist gemäß Fig. 10 an der Vorrichtung 15 an einem Drehelement 7 ein Überdruckventil 75 vorgesehen. Das Überdruckventil 75 ist als eine federbelastete und eine Öffnung 73 des Verbindungskanals schließende Dichtklappe 76 ausgebildet, welche bei Überdruck das Druckgas in die äußere Umgebung entweichen läßt. Das Überdruckventil 75 regelt somit den Druckaufbau sowohl in der Druckkammer 56 als auch im Expansionsraum 64 bzw. 83.

Die aktive Kopfstütze 1 kann sowohl an einem Vordersitz als auch an einem Hintersitz angeordnet sein. Bei einer auf der Sitzlehne des Hintersitzes befestigten Kopfstütze 1 kann die Vorrichtung 15 - wie in Fig. 9 bis Fig. 11 gezeigt - derart ausgebildet sein, daß bei Betätigung einer federbelasteten Riegeltaste 54 die Kopfstütze 1 nach vorn bzw. nach hinten um etwa 90° weggeklappt werden kann. Dies ermöglicht eine drehbare Lagerung des rohrförmigen Drehlagers 10 in einem Lagergehäuse 77, welches fest mit den Verankerungsstangen 25 verbunden ist. Mit einer nicht dargestellten aber an sich bekannten mechanischen oder elektrischen (elektronischen) Sensorik kann die Antriebseinrichtung 84 im weggeklappten Zustand der Kopfstütze 1 entaktiviert werden. Mit dieser Ausbildung der Kopfstütze 1 kann die Sitzlehne ohne Demontage der Kopfstütze 1 umgeklappt bzw. eine bessere Sicht nach hinten ermöglicht werden.

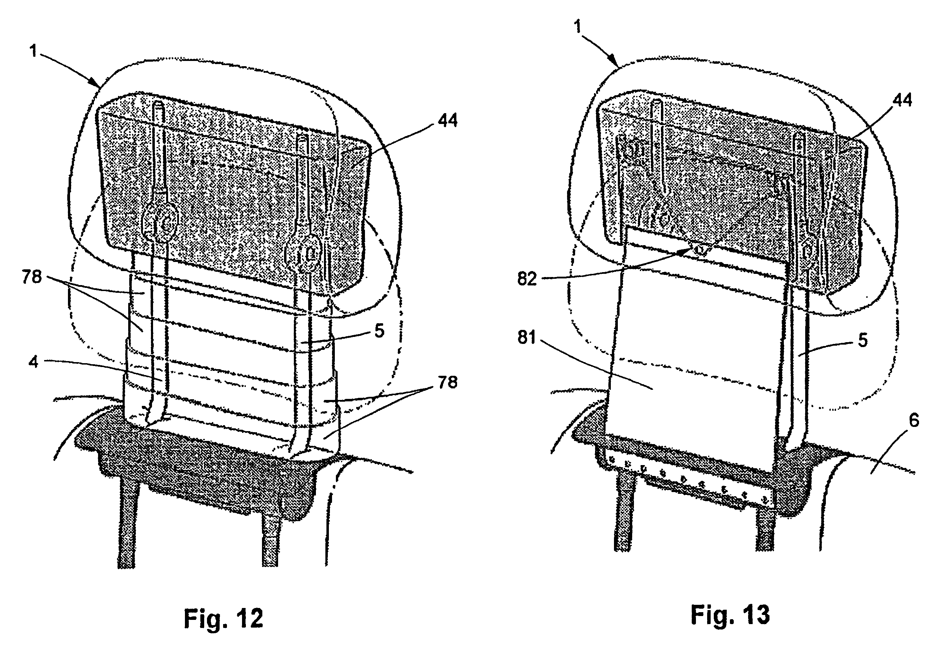

Der Stützkörper 44 der Kopfstütze 1 kann gemäß einer alternativen, in Fig. 12 dargestellten Ausführung höhenverstellbar mit den Stützeinrichtungen 4, 5 verbunden sein, wenn die Stützeinrichtungen 4, 5 durch ringförmige, teleskopisch auseinanderziehbare elastische Abdeckelemente 78 verkleidet sind. Die Abdeckelemente 78 bilden somit die zusätzliche Abstützfläche bei der nach oben verstellten Kopfstütze 1. Zum Verstellen der Kopfstütze 1 in der Höhe können bei dieser Ausführung die mit dem Stützkörper 44 verbundenen Schwenklager 53 höhenverstellbar, rastpositionierbar und in der aktiv nach oben verstellten Position verriegelbar an den Stützeinrichtungen 4, 5 ausgebildet sein.

In Fig. 13 ist eine weitere alternative aktive Kopfstütze 1 dargestellt, bei der zum Vergleich mit der Ausführung nach Fig. 12 die zusätzliche Abstützfläche durch einen im Bereich der Stützeinrichtungen 4, 5 zwischen dem Stützkörper 44 und der Oberkante der Sitzlehne 6 spannbaren elastischen Vorhang 81 gebildet ist. Der Vorhang 81 wird bei der Höhenverstellung in der jeweiligen Stützposition von einer Federspannvorrichtung 82 in einem leicht gespannten Zustand gehalten, während bei der aktiven Verstellung der Kopfstütze 1 in der Höhe zur Bildung einer Abstützfläche eine straffe Vorspannung des Vorhangs 81 vorgesehen ist.

## Patentansprüche

1. Vorrichtung zum Verstellen der Neigung einer Kopfstütze an einer Sitzlehne eines Fahrzeugsitzes um eine horizontale und im Wesentlichen parallel zur Sitzoberkante verlaufende Achse, wobei eine Stützeinrichtung (4, 5), mit welcher die Kopfstütze (1) an der Sitzlehne (6) abgestützt ist, an einem in der Sitzlehne (6) drehbar gelagerten Drehelement (7) gelagert ist, das durch eine Antriebseinrichtung (8) um eine durch den oberen Teil der Sitzlehne (6) verlaufende Achse (3) nach vorne drehbar ist, wenn eine überhöhte Beschleunigung auf das Fahrzeug wirkt und wobei das Drehelement (7) und die daran gelagerte Kopfstütze (1) in der Winkelstellung, in die sie durch die Antriebseinrichtung (8) gedreht worden ist, durch eine Rücklaufsperre (9, 19, 20) gegen Rückdrehung gesichert ist, **dadurch gekennzeichnet, dass** die Rücklaufsperre (9, 19, 20) direkt auf das Drehelement (7) wirkt.

2. Vorrichtung nach Anspruch 1, **dadurch gekennzeichnet, dass** die Antriebseinrichtung (8) durch eine fahrzeugsensitive Einrichtung startbar ist.

3. Vorrichtung nach Anspruch 1 oder 2, **dadurch gekennzeichnet, dass** die Kopfstütze (1) am Drehelement (7) derart geführt ist, dass bei der angetriebenen Drehbewegung die Kopfstütze (1) gleichzeitig bezüglich der Achse (3) radial nach außen bewegt ist.

4. Vorrichtung nach einem der Ansprüche 1 bis 3, **dadurch gekennzeichnet, dass** das Drehelement (7) in einem rohrförmigen Drehlager (10) gelagert ist.

5. Vorrichtung nach einem der Ansprüche 1 bis 4, **dadurch gekennzeichnet, dass** die Sensoreinrichtung, welche die Antriebseinrichtung (8) startet, am Fahrzeugaufbau stärr befestigt ist.

6. Vorrichtung nach einem der Ansprüche 1 bis 5, **dadurch gekennzeichnet, dass** die Antriebseinrichtung (8) am Fahrzeugaufbau gelagert ist.

7. Vorrichtung nach einem der Ansprüche 1 bis 6, **dadurch gekennzeichnet, dass** die Antriebseinrichtung (8) über einen Bowdenzug (11) mit dem Drehelement (7) verbunden ist.

8. Vorrichtung nach Anspruch 7, **dadurch gekennzeichnet, dass** der Bowdenzug (11) über einen Bajonettverschluss (12) mit einem Antriebselement (13) der Antriebseinrichtung (8) verbunden ist.

9. Vorrichtung nach einem der Ansprüche 1 bis 8, **dadurch gekennzeichnet, dass** das Drehelement (7) im Normalbetrieb gegen Drehung durch eine Verriegelungseinrichtung (14) verriegelt ist.

10. Vorrichtung nach Anspruch 9, **dadurch gekennzeichnet, dass** die Verriegelungseinrichtung (14) des Drehelementes (7) durch die am Drehelement (7) angreifende Antriebskraft der Antriebseinrichtung (8) lösbar ist.

11. Vorrichtung nach einem der Ansprüche 1 bis 10, **dadurch gekennzeichnet, dass** die Kopfstütze (1) um einen Winkel von etwa 15° bis 20° nach vorne durch die Antriebskraft der Antriebseinrichtung (8) schwenkbar ist.

12. Vorrichtung nach einem der Ansprüche 1, 2, 4, 5 oder 11, wobei die Kopfstütze (1) zumindest ein eine Abstützfläche für den Kopf eines Insassen bildendes Polsterteil (41) sowie eine das Polsterteil (41) in der jeweiligen Stützposition haltende Trageinrichtung (42) aufweist, **dadurch gekennzeichnet, dass** die Kopfstütze (1) bzw. das Polsterteil (41) höhenverstellbar an der Trageinrichtung (42) ausgebildet ist, wobei die Höhenverstellung im Falle eines Frontal- bzw. Heckaufpralls durch die Antriebsvorrichtung (8) bzw. eine weitere Antriebsvorrichtung (84) erfolgt.

13. Vorrichtung nach Anspruch 12, **dadurch gekennzeichnet, dass** die Antriebseinrichtung (84) zum gleichzeitigen Verstellen des Polsterteils (41) nach vorn und in der Höhe ausgebildet ist.

14. Vorrichtung nach Anspruch 12 oder 13, **dadurch gekennzeichnet, dass** das Polsterteil (41) durch die Antriebseinrichtung (84) in die höchste Stützposition verstellbar und in dieser Position verriegelbar ausgebildet ist.

15. Vorrichtung nach einem der Ansprüche 12 bis 14, **dadurch gekennzeichnet, dass** im Falle eines Frontalbzw. Heckaufpralls zwischen dem nach oben verstellten Polsterteil (41) und der Oberkante der Sitzlehne (6) eine weitere Abstützfläche für den Kopf eines Insassen gebildet wird.

16. Vorrichtung nach Anspruch 15, **dadurch gekennzeichnet, dass** die weitere Abstützfläche durch einen mit der Trageinrichtung (42) verbundenen und zumindest im Bereich der Abstützfläche dämpfende Eigenschaften aufweisenden Stützkörper (44) gebildet ist.

17. Vorrichtung nach einem der Ansprüche 12 bis 16, **dadurch gekennzeichnet, dass** das Polsterteil (41) und der Stützkörper (44) ineinanderschiebbar ausgebildet sind, wobei am Polsterteil (41) zum Aufnehmen bzw. Einschieben des Stützkörpers (44) ein Aufnahmeraum (45) vorgesehen ist.

18. Vorrichtung nach einem der Ansprüche 12 bis 17, **dadurch gekennzeichnet, dass** die Trageinrichtung (42) zwei beabstandet zueinander angeordnete und mit dem Stützkörper (44) verbundene Stützeinrichtungen (4, 5) aufweist, welche mit jeweils einem in der Vorrichtung (15) drehbar gelagerten Drehelement (7) verbunden sind.

19. Vorrichtung nach einem der Ansprüche 12 bis 18, **dadurch gekennzeichnet, dass** die Vorrichtung (15) ein rohrförmiges Drehlager (10) aufweist, an dem zum Verbinden mit der Sitzlehne (6) zwei senkrecht zur Achse (3) der Kopfstütze (1) angeordnete Verankerungsstangen (25) vorgesehen sind.

20. Vorrichtung nach einem der Ansprüche 12 bis 19, **dadurch gekennzeichnet, dass** das Polsterteil (41) bzw. der Stützkörper (44) neigungsverstellbar um eine horizontal und quer zur Fahrtrichtung (**F**) ausgerichtete Drehachse (51) mit den Stützeinrichtungen (4, 5) verbunden ist.

21. Vorrichtung nach einem der Ansprüche 12 bis 20, **dadurch gekennzeichnet, dass** an der Trageinrichtung (42) bzw. am Stützkörper (44) zumindest eine Führungseinrichtung (46) zur Höhenverstellung und/oder Rastpositionierung des Polsterteils (41) vorgesehen ist.

22. Vorrichtung nach Anspruch 21, **dadurch gekennzeichnet, dass** die Führungseinrichtung (46) zumindest eine mit dem Stützkörper (44) verbundene Führungshülse (48) oder -schiene aufweist, die eine mit dem Polsterteil (41) verbundene Führungsstange (47) oder -leiste höhenverstellbar und/oder rastpositionierbar aufnimmt.

23. Vorrichtung nach einem der Ansprüche 12 bis 22, **dadurch gekennzeichnet, dass** die Antriebsvorrichtung (84) zum Verdrehen der Drehelemente (7) durch einen pyrotechnischen Treibsatz oder einen Hybridgenerator ausgebildet ist.

24. Vorrichtung nach einem der Ansprüche 18 bis 23, **dadurch gekennzeichnet, dass** die Drehelemente (7) jeweils einen koaxial zur Achse (3) der Kopfstütze (1) ausgerichteten Fortsatz (62) mit zumindest einer schraubenförmigen Führungsfläche (63) aufweisen.

25. Vorrichtung nach Anspruch 24, **dadurch gekennzeichnet, dass** am jeweiligen Fortsatz (62) jeweils ein im Drehlager (10) unverdrehbar aber im Bereich der Führungsfläche (63) axial verschiebbar geführter Kolben (58) vorgesehen ist.

26. Vorrichtung nach Anspruch 25, **dadurch gekennzeichnet, dass** zur Führung der Kolben (58) am rohrförmigen Drehlager (10) axial ausgerichtete Führungsschlitze (61) vorgesehen sind, in welche die Kolben (58) mit jeweils einem radial abstehenden Vorsprung bzw. einer Nase (60) eingreifen.

27. Vorrichtung nach einem der Ansprüche 23 bis 26, **dadurch gekennzeichnet, dass** die Antriebseinrichtung (84) eine innerhalb des rohrförmigen Drehlagers (10) angeordnete Druckkammer (56) aufweist, welche durch den pyrotechnischen Treibsatz oder den Hybridgenerator mit Druckgas befüllbar ist.

28. Vorrichtung nach Anspruch 27, **dadurch gekennzeichnet, dass** die Druckkammer (56) in einem Druckverteiler (55) angeordnet ist, welcher mit zu den jeweiligen Kolben (58) führenden Kanälen (57) für das Druckgas ausgebildet ist.

29. Vorrichtung nach einem der Ansprüche 23 bis 28, **dadurch gekennzeichnet, dass** bei Auslösung der Antriebseinrichtung (84) die mit Druckgas beaufschlagten Kolben (58) die Drehelemente (7) durch Verschiebung entlang der schraubenförmigen Führungsflächen (63) zwangsweise um einen bestimmten Winkelbetrag, vorzugsweise 15° - 20°, verdrehen.

30. Vorrichtung nach einem der Ansprüche 23 bis 29, **dadurch gekennzeichnet, dass** zur Vermeidung einer Rückverschiebung der Kolben (58) nach der Auslösung der Antriebseinrichtung (84) die Führungsflächen (63) an den Fortsätzen (62) selbsthemmend ausgebildet sind.

31. Vorrichtung nach einem der Ansprüche 12 bis 30, **dadurch gekennzeichnet, dass** die Höhenverstellung des Polsterteils (41) durch Beaufschlagung eines am Polsterteil (41) bzw. an der Trageinrichtung (42) angeordneten Expansionsraumes (64; 83) mit Druckgas erfolgt.

32. Vorrichtung nach Anspruch 31, **dadurch gekennzeichnet, dass** der Expansionsraum (64) im Aufnahmeraum (45) zwischen einer Innenwandung des in der jeweiligen Stützposition befindlichen Polsterteils (41) und dem Stützkörper (44) gebildet wird, wobei der Expansionsraum (64) in allen Stützpositionen des Polsterteils (41) an den gemeinsamen Führungs- und/ oder Kontaktflächen zwischen dem Polsterteil (41) und dem Stützkörper (44) abgedichtet ist.

33. Vorrichtung nach Anspruch 31, **dadurch gekennzeichnet, dass** als Expansionsraum der Kolbenraum einer zwischen dem Polsterteil (41) und dem Stützkörper (44) bzw. der Trageinrichtung (42) wirkenden Zylinder-Kolben-Vorrichtung vorgesehen ist.

34. Vorrichtung nach einem der Ansprüche 31 bis 33, **dadurch gekennzeichnet, dass** zur Beaufschlagung des Expansionsraumes (64; 83) mit Druckgas zumindest die Drehelemente (7) und die Stützeinrichtungen (4, 5) jeweils hohl bzw. mit inneren Kanälen (68, 67) ausgebildet und derart miteinander verbunden sind, dass ein dichter Verbindungskanal zwischen dem Druckverteiler (55) bzw. der Druckkammer (56) und dem Expansionsraum (64; 83) gebildet wird.

35. Vorrichtung nach einem der Ansprüche 12 bis 34, **dadurch gekennzeichnet, dass** die Trageinrichtung (42) zur Höhenverstellung des Polsterteils (41) zumindest einen durch die Antriebseinrichtung (84) axial verschiebbaren Stößel (69) aufweist.

36. Vorrichtung nach Anspruch 35, **dadurch gekennzeichnet, dass** der Stößel (69) verschiebbar in der Stützeinrichtung (5) gelagert und mit seinem oberen Ende (70) gegen das Polsterteil (41) anliegt bzw. mit diesem verbunden ist.

37. Vorrichtung nach einem der Ansprüche 12 bis 36, **dadurch gekennzeichnet, dass** zur Verriegelung des nach oben verstellten Polsterteils (41) am Polsterteil (41) oder an der Trageinrichtung (42) ein senkrecht zur Verstellbewegung bewegbares Verriegelungselement (72) vorgesehen ist.

38. Vorrichtung nach Anspruch 37, **dadurch gekennzeichnet, dass** das Verriegelungselement (72) mit einer am Stößel (69) angeordneten Raste, Ausnehmung oder Kerbe zusammenwirkt.

39. Vorrichtung nach einem der Ansprüche 31 bis 38, **dadurch gekennzeichnet, dass** zur Begrenzung der Kraft, mit welcher die Kopfstütze (1) bzw. das Polsterteil (41) durch die ausgelöste Antriebseinrichtung (84) nach vorn geschwenkt und/oder nach oben verstellt wird, an der Vorrichtung (15) bzw. der Antriebsvorrichtung (84) ein Überdruckventil (75) vorgesehen ist.

40. Vorrichtung nach Anspruch 39, **dadurch gekennzeichnet, dass** das Überdruckventil (75) am Verbindungskanal zwischen dem Druckverteiler (55) bzw. der Druckkammer (56) und dem Expansionsraum (64; 83) vorgesehen ist.

41. Vorrichtung nach Anspruch 39 oder 40, **dadurch gekennzeichnet, dass** das Überdruckventil (75) als eine federbelastete und eine Öffnung (73) des Verbindungskanals schließende Dichtklappe (76) ausgebildet ist.

42. Vorrichtung nach einem der Ansprüche 12 bis 41, **dadurch gekennzeichnet, dass** die Vorrichtung (15) bei Nichtbenutzung der Kopfstütze (1) zum Umklappen der Kopfstütze (1) nach vorn bzw. nach hinten ausgebildet ist.

43. Vorrichtung nach Anspruch 42, **dadurch gekennzeichnet, dass** zum Umklappen der Kopfstütze (1) nach vorn bzw. nach hinten das rohrförmige Drehlager (10) verdrehbar und rastpositionierbar in einem Lagergehäuse (77) aufgenommen ist, wobei das Lagergehäuse (77) zur lösbaren Befestigung an der Sitzlehne (6) mit den Verankerungsstangen (25) verbunden ist.

44. Vorrichtung nach einem der Ansprüche 12 bis 15, **dadurch gekennzeichnet, dass** die weitere Abstützfläche durch ringförmige, die Trageinrichtung (42) umgebende und teleskopisch auseinander ausziehbare elastische Abdeckelemente (78) gebildet ist.

45. Vorrichtung nach einem der Ansprüche 12 bis 15, **dadurch gekennzeichnet, dass** die weitere Abstützfläche durch einen im Bereich der Trageinrichtung (42) zwischen der Kopfstütze (1) und der Oberkante der Sitzlehne (6) spannbaren elastischen Vorhang (81) gebildet ist.

## Claims

1. Apparatus for adjusting the tilt of a headrest on a seat back of a vehicle seat about a horizontal axis running essentially parallel to the upper edge of the seat, wherein a support device (4, 5) with which the headrest (1) is supported on the seat back (6) is mounted on a swivel element (7) which is mounted rotatably in the seat back (6) and which is forwardly rotatable by a drive device (8) about an axis (3) passing through the upper portion of the seat back (6) when excessive acceleration acts on the vehicle and wherein the swivel element (7) and the headrest (1) mounted thereon in the angular position into which it has been rotated by the drive device (8) is prevented from turning back by a return lock (9, 19, 20), **characterised in that** the return lock (9, 19, 20) acts directly on the swivel element (7).

2. Apparatus according to claim 1, **characterised in that** the drive device (8) can be started by a vehicle-sensitive device.

3. Apparatus according to claim 1 or 2, **characterised in that** the headrest (1) is guided on the swivel element (7) in such a way that during the driven rotary movement the headrest (1) is simultaneously moved radially outwards relative to the axis (3).

4. Apparatus according to any of claims 1 to 3, **characterised in that** the swivel element (7) is mounted in a tubular swivel bearing (10).

5. Apparatus according to any of claims 1 to 4, **characterised in that** the sensor device which starts the drive device (8) is rigidly attached to the vehicle body.

6. Apparatus according to any of claims 1 to 5, **characterised in that** the drive device (8) is mounted on the vehicle body.

7. Apparatus according to any of claims 1 to 6, **characterised in that** the drive device (8) is connected by a Bowden cable (11) to the swivel element (7).

8. Apparatus according to claim 7, **characterised in that** the Bowden cable (11) is connected by a bayonet fastening (12) to a drive element (13) of the drive device (8).

9. Apparatus according to any of claims 1 to 8, **characterised in that** the swivel element (7) is locked by a locking device (14) to prevent rotation during normal running.

10. Apparatus according to claim 9, **characterised in that** the locking device (14) of the swivel element (7) is releasable by the driving force of the drive device (8) applied to the swivel element (7).

11. Apparatus according to any of claims 1 to 10, **characterised in that** the headrest (1) is pivotable forwards through an angle of approximately 15° to 20° by the driving force of the drive device (8).

12. Apparatus according to any of claims 1, 2, 4, 5 or 11, wherein the headrest (1) comprises at least one upholstery portion (41) forming a supporting surface for the head of a passenger as well as a carrying device (42) which holds the upholstery portion (41) in the respective supporting position, **characterised in that** the headrest (1) or the upholstery portion (41) is constructed vertically adjustably on the carrying device (42), wherein in case of a head-on or rear-end collision vertical adjustment is effected by the drive device (8) or a further drive device (84).

13. Apparatus according to claim 12, **characterised in that** the drive device (84) is designed for simultaneously adjusting the upholstery portion (41) forwardly and vertically.

14. Apparatus according to claim 12 or 13, **characterised in that** the upholstery portion (41) can be adjusted to the highest supporting portion by the drive device (84) and locked in this position.

15. Apparatus according to any of claims 12 to 14, **characterised in that**, in case of a head-on or rear-end collision, between the upwardly adjusted upholstery portion (41) and the upper edge of the seat back (6) is formed a further supporting surface for the head of a passenger.

16. Apparatus according to claim 15, **characterised in that** the further supporting surface is formed by a support body (44) connected to the carrying device (42) and exhibiting damping properties at least in the region of the supporting surface.

17. Apparatus according to any of claims 12 to 16, **characterised in that** the upholstery portion (41) and the support body (44) can be slid one inside the other, wherein on the upholstery portion (41) is provided a receiving chamber (45) for receiving or insertion of the support body (44).

18. Apparatus according to any of claims 12 to 17, **characterised in that** the carrying device (42) comprises two spaced-apart support devices (4, 5) which are connected to the support body (44) and which are each connected to a swivel element (7) mounted rotatably in the apparatus (15).

19. Apparatus according to any of claims 12 to 18, **characterised in that** the apparatus (15) comprises a tubular swivel bearing (10) on which are provided two anchor rods (25) arranged perpendicularly to the axis (3) of the headrest (1) for connection to the seat back (6).

20. Apparatus according to any of claims 12 to 19, **characterised in that** the upholstery portion (41) or the support body (44) is connected to the support devices (4, 5) with adjustable tilt about an axis of rotation (51) oriented horizontally and transversely to the direction of travel (F).

21. Apparatus according to any of claims 12 to 20, **characterised in that** on the carrying device (42) or on the support body (44) is provided at least one guide device (46) for vertical adjustment and/or latch positioning of the upholstery portion (41).

22. Apparatus according to claim 21, **characterised in that** the guide device (46) comprises at least one guide sleeve (48) or rail which is connected to the support body (44) and which receives a guide rod (47) or bar connected to the upholstery portion (41) in a manner allowing vertical adjustment and/or latch positioning.

23. Apparatus according to any of claims 12 to 22, **characterised in that** the drive device (84) is designed for rotation of the swivel elements (7) by a pyrotechnic propellant charge or a hybrid generator.

24. Apparatus according to any of claims 18 to 23, **characterised in that** the swivel elements (7) in each case comprise an extension (62) oriented coaxially with the axis (3) of the headrest (1), with at least one helical guide surface (63).

25. Apparatus according to claim 24, **characterised in that** on the respective extension (62) is provided in each case a piston (58) which is guided non-rotatably in the swivel bearing (10) but axially slidably in the region of the guide surface (63).

26. Apparatus according to claim 25, **characterised in that**, for guiding the pistons (58), on the tubular swivel bearing (10) are provided axially oriented guide slots (61) in which the pistons (58) engage each with a radial projection or lug (60).

27. Apparatus according to any of claims 23 to 26, **characterised in that** the drive device (84) comprises a pressure chamber (56) which is arranged within the tubular swivel bearing (10) and which can be filled with compressed gas by the pyrotechnic propellant charge or the hybrid generator.

28. Apparatus according to claim 27, **characterised in that** the pressure chamber (56) is arranged in a pressure distributor (55) which is designed with channels (57) for the compressed gas leading to the respective pistons (58).

29. Apparatus according to any of claims 23 to 28, **characterised in that**, when the drive device (84) is triggered, the pistons (58) subjected to compressed gas rotate the swivel elements (7) positively through a given angular amount, preferably 15° - 20°, by displacement along the helical guide surfaces (63).

30. Apparatus according to any of claims 23 to 29, **characterised in that**, to avoid reverse displacement of the pistons (58) after triggering of the drive device (84), the guide surfaces (63) on the extensions (62) have a self-locking construction.

31. Apparatus according to any of claims 12 to 30, **characterised in that** vertical adjustment of the upholstery portion (41) is effected by admission of compressed gas to an expansion chamber (64; 83) arranged on the upholstery portion (41) or on the carrying device (42).

32. Apparatus according to claim 31, **characterised in that** the expansion chamber (64) is formed in the receiving chamber (45) between an inner wall of the upholstery portion (41) located in the respective supporting position and the support body (44), wherein the expansion chamber (64) is sealed in all supporting positions of the upholstery portion (41) on the common guide and/or contact surfaces between the upholstery portion (41) and the support body (44).

33. Apparatus according to claim 31, **characterised in that** the piston chamber of a piston and cylinder unit operating between the upholstery portion (41) and the support body (44) or carrying device (42) is provided as the expansion chamber.

34. Apparatus according to any of claims 31 to 33, **characterised in that**, for admission of compressed gas to the expansion chamber (64; 83), at least the swivel elements (7) and the support devices (4, 5) are in each case hollow or designed with internal channels (68, 67) and connected to each other in such a way that a sealed connecting channel is formed between the pressure distributor (55) or pressure chamber (56) and the expansion chamber (64; 83).

35. Apparatus according to any of claims 12 to 34, **characterised in that** the carrying device (42) for vertical adjustment of the upholstery portion (41) comprises at least one plunger (69) which is axially displaceable by the drive device (84).

36. Apparatus according to claim 35, **characterised in that** the plunger (69) is mounted displaceably in the support device (5) and with its upper end (70) abuts against the upholstery portion (41) or is connected to the latter.

37. Apparatus according to any of claims 12 to 36, **characterised in that** a locking element (72) movable perpendicularly to the adjusting movement is provided on the upholstery portion (41) or on the carrying device (42) for locking the upwardly adjusted upholstery portion (41).

38. Apparatus according to claim 37, **characterised in that** the locking element (72) cooperates with a catch, recess or notch arranged on the plunger (69).

39. Apparatus according to any of claims 31 to 38, **characterised in that**, to limit the force with which the headrest (1) or upholstery portion (41) is pivoted forwards and/or adjusted upwards by the triggered drive device (84), a pressure control valve (75) is provided on the apparatus (15) or on the drive device (84).

40. Apparatus according to claim 39, **characterised in that** the pressure control valve (75) is provided on the connecting channel between the pressure distributor (55) or pressure chamber (56) and the expansion chamber (64; 83).

41. Apparatus according to claim 39 or 40, **characterised in that** the pressure control valve (75) is designed as a spring-loaded sealing valve (76) which closes an opening (73) of the connecting channel.

42. Apparatus according to any of claims 12 to 41, **characterised in that** the apparatus (15) is designed to fold the headrest (1) forwards or rearwards when the headrest (1) is not in use.

43. Apparatus according to claim 42, **characterised in that**, to fold the headrest (1) forwards or rearwards, the tubular swivel bearing (10) is received in a bearing housing (77) so that it is rotatable and latch-positionable, wherein the bearing housing (77) is connected to the anchor rods (25) for releasable attachment to the seat back (6).

44. Apparatus according to any of claims 12 to 15, **characterised in that** the further supporting surface is formed by annular flexible cover elements (78) which surround the carrying device (42) and can be pulled apart telescopically.

45. Apparatus, according to any of claims 12 to 15, **characterised in that** the further supporting surface is formed by a flexible curtain (81) which can be mounted in the region of the carrying device (42) between the headrest (1) and the upper edge of the seat back (6).

## Revendications

1. Dispositif de réglage de l'inclinaison d'un appui-tête sur un dossier d'un siège de véhicule, autour d'un axe horizontale, essentiellement parallèle au bord supérieur du siège, un dispositif de support (4, 5) par lequel l'appuie-tête (1) est supporté sur le dossier de siège (6) étant monté sur un élément (7) monté tournant dans le dossier de siège (6), qui peut être entraîné en rotation vers l'avant par un dispositif d'entraînement (8), autour d'un axe (3) s'étendant dans la partie supérieure du dossier de siège (6), lorsqu'une accélération anormalement élevée agit sur le véhicule et l'élément tournant (7) avec l'appuie-tête (1) lié à celui-ci, étant verrouillé contre un mouvement de retour, par un cliquet anti-retour (9, 19, 20), dans la position angulaire dans laquelle il a été amené parle dispositif d'entraînement (8) **caractérisé en ce que** le cliquet anti-retour (9, 19, 20) agit directement sur l'élément tournant (7)

2. Dispositif selon la revendication 1, **caractérisé en ce que** le dispositif d'entraînement (8) peut être déclenché par un dispositif de capteurs du véhicule.

3. Dispositif selon la revendication 1 ou 2, **caractérisé en ce que** l'appuie-tête (1) est guidé sur l'élément tournant (7) de manière telle que lors du mouvement d'entraînement l'appuie-tête (1) soit simultanément déplacé radicalement en direction de l'extérieur par rapport à l'axe (3).

4. Dispositif selon une des revendications 1 à 3, **caractérisé en ce que** l'élément tournant (7) est monté dans un palier tubulaire (10).

5. Dispositif selon une des revendications 1 à 4, **caractérisé en ce que** le dispositif de capteurs qui déclenche le dispositif d'entraînement (8) est fixé rigidement à la structure du véhicule.

6. Dispositif selon une des revendications 1 à 5, **caractérisé en ce que** le dispositif d'entraînement (8) est monté sur la structure du véhicule.

7. Dispositif selon une des revendications 1 à 6, **caractérisé en ce que** le dispositif d'entraînement (8) est relié à l'élément tournant (7) par un câble de Bowden (11).

8. Dispositif selon la revendication 7, **caractérisé en ce que** le câble de Bowden (11) est relié à un élément d'entraînement (13) du dispositif d'entraînement (8) par un enclenchement à baïonnette (12).

9. Dispositif selon une des revendications 1 à 8, **caractérisé en ce que** l'élément tournant (7) en utilisation normale est verrouillé en rotation par un dispositif de verrouillage (14).

10. Dispositif selon la revendication 9, **caractérisé en ce que** le dispositif de verrouillage (14) de l'élément tournant (7) peut être libéré par la force d'entraînement du dispositif d'entraînement (8) agissant sur ledit élément tournant (7).

11. Dispositif selon une des revendications 1 à 10, **caractérisé en ce que** l'appuie-tête (1), sous l'action de la force du dispositif d'entraînement (8), peut pivoter vers l'avant d'un angle d'environ 15° à 20°.

12. Dispositif selon une des revendications 1, 2, 4, 5 ou 11, dans lequel l'appuie-tête (1) présente au moins une partie coussin (41) qui forme une surface d'appui pour la tête d'un passager et un dispositif de support (42), qui tient la partie coussin (41) dans la position d'appui souhaitée, **caractérisé en ce que** l'appuie-tête (1) ou la partie coussin (41) peut être déplacée en hauteur sur le dispositif de support (42), le déplacement en hauteur, en cas de collision frontale ou de collision arrière, ayant lieu par l'intermédiaire du dispositif d'entraînement (8) ou d'un dispositif d'entraînement (84) supplémentaire.

13. Dispositif selon la revendication 12, **caractérisé en ce que** le dispositif d'entraînement (84) est agencé pour le déplacement simultané de la partie coussin (41) vers l'avant et en hauteur.

14. Dispositif selon la revendication 12 ou 13, **caractérisé en ce que** la partie coussin (41) est agencée de manière à pouvoir être amenée dans la position d'appui la plus haute et verrouillée dans cette position par le dispositif d'entraînement (84).

15. Dispositif selon une des revendications 12 à 14, **caractérisé en ce que**, en cas de collision frontale ou de collision arrière, une surface d'appui supplémentaire pour la tête d'un passager est formée entre la partie coussin (41) déplacée vers le haut et le bord supérieur du dossier de siège (6).

16. Dispositif selon la revendication 15, **caractérisé en ce que** la surface d'appui supplémentaire est formée par un élément de soutien (44) qui est lié au dispositif de support (42) et qui, au moins dans la région de la surface d'appui, présente des caractéristiques amortissantes.

17. Dispositif selon une des revendications 12 à 16, **caractérisé en ce que** la partie coussin (41) et l'élément de soutien (44) peuvent coulisser l'un dans l'autre, un logement (45) étant prévu dans la partie coussin (41) pour recevoir l'élément de soutien (44)et permettre le coulissement de ce dernier.

18. Dispositif selon une des revendications 12 à 17, **caractérisé en ce que** le dispositif de support (42) comporte deux dispositifs de soutien (4, 5) espacés l'un de l'autre, liés à l'élément de soutien (44), qui sont reliés chacun à un élément tournant (7) monté tournant dans le dispositif (15).

19. Dispositif selon une des revendications 12 à 18, **caractérisé en ce que** le dispositif (15) comporte un palier (10) tubulaire, sur lequel sont prévues deux tiges d'ancrage (25) disposées perpendiculairement à l'axe (3) de l'appuie-tête (1) pour assurer la liaison avec le dossier de siège (6).

20. Dispositif selon une des revendications 12 à 19, **caractérisé en ce que** la partie coussin (41) et l'élément de soutien (44) sont liés aux dispositifs de soutien (4, 5) avec possibilité de réglage en inclinaison autour d'un axe de rotation (51) orienté horizontalement et transversalement à la direction de déplacement (F).

21. Dispositif selon une des revendications 12 à 20, **caractérisé en ce qu'**il est prévu sur le dispositif de support (42) et sur l'élément de soutien (44), au moins un dispositif de guidage (46) pour le réglage en hauteur et/ou le blocage par enclenchement de la partie coussin (41).

22. Dispositif selon la revendication 21, **caractérisé en ce que** le dispositif de guidage (46) présente au moins un manchon de guidage (48) ou un rail de guidage qui est lié à l'élément de soutien (44) et reçoit avec possibilité de réglage en hauteur et/ou de blocage par enclenchement une tige de guidage (47) ou une barre de guidage liée à la partie coussin (41).

23. Dispositif selon une des revendications 12 à 22, **caractérisé en ce que** le dispositif d'entraînement (84) assurant la rotation de l'élément tournant (7) se présente sous la forme d'une charge propulsive pyrotechnique ou d'un générateur hybride.

24. Dispositif selon une des revendications 18 à 23, **caractérisé en ce que** les éléments tournants (7) comportent un prolongement (62) coaxial avec l'axe (3) de l'appuie-tête (1), avec au moins une surface de guidage (63) en hélice.

25. Dispositif selon la revendication 24, **caractérisé en ce qu'**un palier (10) est monté fixe en rotation sur le prolongement (62) et qu'un piston (58) est guidé avec possibilité de déplacement dans la direction axiale dans la région de la surface de guidage (63).

26. Dispositif selon la revendication 25, **caractérisé en ce qu'**il est prévu pour le guidage du piston (58) sur le palier (10) tubulaire des fentes de guidage (61) axiales, dans lesquelles les pistons (58) s'engagent avec une saillie ou un téton (60) radial.

27. Dispositif selon une des revendications 23 à 26, **caractérisé en ce que** le dispositif d'entraînement (84) comporte une chambre de pression (56) aménagée à l'intérieur du palier (10) tubulaire, qui peut être remplie de gaz sous pression par la charge propulsive ou le générateur hybride.

28. Dispositif selon la revendication 27, **caractérisé en ce que** la chambre de pression (56) est aménagée dans un distributeur de pression (55), qui comporte des canaux (57) d'acheminement du gaz sous pression menant aux pistons (58).

29. Dispositif selon une des revendications 23 à 28, **caractérisé en ce que** lors du déclenchement du dispositif d'entraînement (84), les pistons (58) sollicités par le gaz sous pression, en coulissant le long des surfaces de guidage (63) hélicoïdales, engendrent une rotation forcée des éléments tournants (7) d'une valeur d'angle déterminée, de préférence de 15° à 20°.

30. Dispositif selon une des revendications 23 à 29, **caractérisé en ce que** pour éviter le recul du piston (58) après le déclenchement du dispositif d'entraînement (84), les surfaces de guidage (63) sur les prolongements (62) sont autobloquantes.

31. Dispositif selon une des revendications 12 à 30, **caractérisé en ce que** le déplacement en hauteur de la partie coussin (41) est obtenu en alimentant en gaz sous pression une chambre d'expansion (64, 83) aménagée dans la partie coussin (41) ou sur le dispositif de support (42).

32. Dispositif selon la revendication 31, **caractérisé en ce que** la chambre d'expansion (64) est aménagée dans le logement (45) entre la paroi intérieure de la partie coussin (41) placée dans la position correspondante et l'élément de soutien (44), l'étanchéité de la chambre d'expansion (64), dans toutes les positions de la partie coussin (41), étant assurée au niveau des surfaces de guidage et/ou de contact communes entre la partie coussin (41) et l'élément de soutien (44).

33. Dispositif selon la revendication 31, **caractérisé en ce qu'**il est prévu comme chambre d'expansion, la chambre de piston d'une ensemble piston-cylindre qui agit entre la partie coussin (41) et l'élément de soutien (44) ou le dispositif de support (42).

34. Dispositif selon une des revendications 31 à 33, **caractérisé en ce que** pour alimenter en gaz sous pression la chambre d'expansion (64, 83), au moins les éléments tournants (7) et les dispositifs de soutien (4, 5) sont creux ou comportent des canaux (68, 67) et sont reliés les uns aux autres, de manière à former un canal de liaison étanche entre le distributeur de pression (55) ou la chambre de pression (56) et la chambre d'expansion (64, 83).

35. Dispositif selon une des revendications 12 à 34, **caractérisé en ce que** le dispositif de support (42) pour le déplacement en hauteur de la partie coussin (41) présente au moins un poussoir (69) qui peut être déplacé axialement par le dispositif d'entraînement (84).

36. Dispositif selon la revendication 35, **caractérisé en ce que** le poussoir (69) est monté coulissant dans le dispositif de soutien (5) et est appliqué par son extrémité supérieure (70 contre la partie coussin (41) voire est lié à celle-ci.

37. Dispositif selon une des revendications 12 à 36, **caractérisé en ce qu'**il est prévu pour le verrouillage de la partie coussin (41) déplacée vers le haut, sur ladite partie coussin (41) ou sur le dispositif de support (42), un élément de verrouillage (72) qui est mobile perpendiculairement à la direction de déplacement.

38. Dispositif selon la revendication 37, **caractérisé en ce que** l'élément de verrouillage (72) coopère avec un cran, une échancrure ou une encoche aménagé sur le poussoir (69).

39. Dispositif selon une des revendications 31 à 38, **caractérisé en ce que** pour limiter la force avec laquelle l'appuie-tête (1) ou la partie coussin (41) est pivotée vers l'avant et/ou déplacée vers le haut par le dispositif d'entraînement (84) lors du déclenchement de celui-ci, il est prévu une soupape de décharge (75) sur le dispositif (15) ou le dispositif d'entraînement (84).

40. Dispositif selon la revendication 39, **caractérisé en ce que** la soupape de décharge (75) est prévue dans le canal de liaison entre le distributeur de pression (55) ou la chambre de pression (56) et la chambre d'expansion (64, 83).

41. Dispositif selon la revendication 39 ou 40, **caractérisé en ce que** la soupape de décharge (75) est conformée en clapet étanche (76) sollicité par ressort qui ferme un orifice du canal de liaison.

42. Dispositif selon une des revendications 12 à 41, **caractérisé en ce que** le dispositif (15), lorsque l'appuie-tête (1) n'est pas utilisé, permet le rabbattement dudit appuie-tête (1) vers l'avant ou vers l'arrière.

43. Dispositif selon la revendication 42, **caractérisé en ce que** pour le rabbattement de l'appuie-tête (1) vers l'avant ou vers l'arrière, le palier (10) tubulaire est monté tournant et avec possibilité d'encliquetage dans un corps de palier (77), le corps de palier (77) étant lié aux tiges d'ancrage (25) à des fins de fixation séparable au dossier de siège (6).

44. Dispositif selon une des revendications 12 à 15, **caractérisé en ce que** la surface d'appui supplémentaire est formée d'éléments de couverture (78) élastiques annulaires qui entourent le dispositif de support (42) et peuvent être déployés de manière télescopique.

45. Dispositif selon une des revendications 12 à 15, **caractérisé en ce que** la surface d'appui supplémentaire est formée d'un rideau (81) élastique qui peut être tendu dans la région du dispositif de support (42), entre l'appuie-tête (1) et le bord supérieur du dossier de siège (6).
